# EUROPEAN PATENT APPLICATION

(11) **EP 4 744 806 A1**
(43) Date of publication of application: **20.05.2026**
(21) Application number: 25215154.3
(22) Date of filing: 12.11.2025
(51) Int. Cl.: B22F 10/28, B22F 12/44, B22F 12/45, B29C 64/153, B33Y 10/00, B33Y 30/00, B33Y 50/02, G03H 1/00, G03H 1/08, G03H 1/22, G02B 26/06, G02B 26/08, G02B 26/10, G02F 1/00

(54) **APPARATUS AND METHOD FOR ADDITIVELY MANUFACTURING THREEDIMENSIONAL OBJECTS**

(30) Priority: 14.11.2024 US 202418947689
(71) Applicant: General Electric Company, Cincinnati, Ohio 45215 (US)
(72) Inventor: Steele, William Joseph, West Chester, 45069 (US); Thompson, Brian Thomas, West Chester, 45069 (US); Estes, Robert Edgar, West Chester, 45069 (US)
(74) Representative: Hafner & Kohl PartmbB

(57) **Abstract**

An apparatus for additively manufacturing three-dimensional objects includes one or more laser beam sources configured to generate a laser beam, and one or more modulation devices disposed downstream of the one or more laser beam sources and configured to receive the laser beam and modulate the laser beam to generate a modulated beam. One or more computing systems are configured to generate one or more output images based on an input to the one or more computing systems of a wavefront pattern, wherein the one or more output images are generated by at least one of a graphics processing unit (GPU) or an integrated circuit. The one or more computing systems are configured to control the one or more modulation devices to generate the modulated beam with the wavefront pattern based on at least one output image of the one or more output images.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIGS., in which:
FIG. 1 is a schematic diagram of an apparatus for additively manufacturing a three-dimensional object in accordance with an exemplary aspect of the present disclosure.
FIG. 2 is a schematic diagram of an apparatus for additively manufacturing a three-dimensional object in accordance with an exemplary aspect of the present disclosure.
FIG. 3 is a block diagram depicting an example computing system according to exemplary embodiments of the present disclosure.
FIG. 4 is a schematic diagram of an exemplary field-programmable gate array (FPGA) module which can include aspects of the present disclosure.
FIG. 5 is a schematic diagram of an apparatus for additively manufacturing a three-dimensional object in accordance with an exemplary aspect of the present disclosure.
FIG. 6 is a flow diagram depicting an embodiment of a method for additively manufacturing a three-dimensional object in accordance with various aspects of the present disclosure.
FIG. 7A is a schematic view of a stage of forming a modulated laser beam with a defined wavefront according to exemplary embodiments of the present disclosure.
FIG. 7B is a schematic view of a stage of forming a modulated laser beam with a defined wavefront according to exemplary embodiments of the present disclosure.
FIG. 7C is a schematic view of a stage of forming a modulated laser beam with a defined wavefront according to exemplary embodiments of the present disclosure.
FIG. 7D is a schematic view of a stage of forming a modulated laser beam with a defined wavefront according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (i.e., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using modulation device. A modulation device such as, by way of non-limiting example, a spatial light modulator may be used to control or modulate an intensity, phase, or polarization of a laser beam. An exemplary embodiment of a spatial light modulator is a liquid crystal on silicon (LCoS) device. Liquid crystals are birefringent such that applying a voltage to a cell, pixel, or modulation element of the modulation device causes a change in a refractive index of the modulation element. The addressable modulation elements may be actuated or controlled to cause the corresponding modulation element to be placed into one or more different modulation states. As used herein, the term "modulation state" refers to a particular state of the modulation element caused by a particular voltage application or alignment of molecules of the modulation element to change the phase, amplitude and/or polarization state of the laser beam incident of the particular modulation element. It should be understood that other types of spatial light modulators may also be used such as, by way of non-limiting example, a micro-electromechanical systems (MEMS) device. A spatial light modulator may also be referred to as a phase light modulator.

The inventors of the present disclosure found that embodiments of the present disclosure can be used to control a modulation device to produce phase only holographic images instead of traditional light only images at high rates of speed. Embodiments of the present disclosure can utilize a graphics processor unit (GPU) to break down the steps into massively parallel capable calculations utilizing a simpler Fast Fourier Transform (FFT) algorithm that includes an iterative approach to reverse match an input the image to define a desired wavefront pattern of a modulated laser beam. Embodiments of the present disclosure also increase the accuracy of the output based on the input image. Additionally or alternatively, a high speed integrated circuit may be used to perform the FFT calculations. In exemplary embodiments, an optical wave phase delay (of up to 2π) enables the reflected light to produce interference patterns of either constructive or destructive light, to form a pattern of energy distribution by producing "vertical" segments or columns needed to form a line of energy (e.g., representing a single horizontal line of the desired output image) and collapsing that vertical energy into the subsequent horizontal line. Embodiments of the present disclosure combine two or more modulation devices to work together using Fourier phase generation techniques to produce a higher resolution of pixels of a defined singular region that can be produced by a single modulation device. The desired output resolution can be calculated across two or more modulation devices to interact in such a way that their wavefronts can be shifted by up to 2π pi from each other and, if calculated to a fraction of a π, can be shifted in such a way as to achieve higher resolution than the native modulation device pixels can achieve. In exemplary embodiments, an array of two identically sized regions of separate modulation devices can achieve approximately ½ pixel resolution when covering the same field of view. This resolution can be attained by adjusting the Fourier calculation to include a ½ pixel offset for each of the regions from each other. For each increase in the number (n) of regions, a 1/n resolution step increase in capability is achievable.

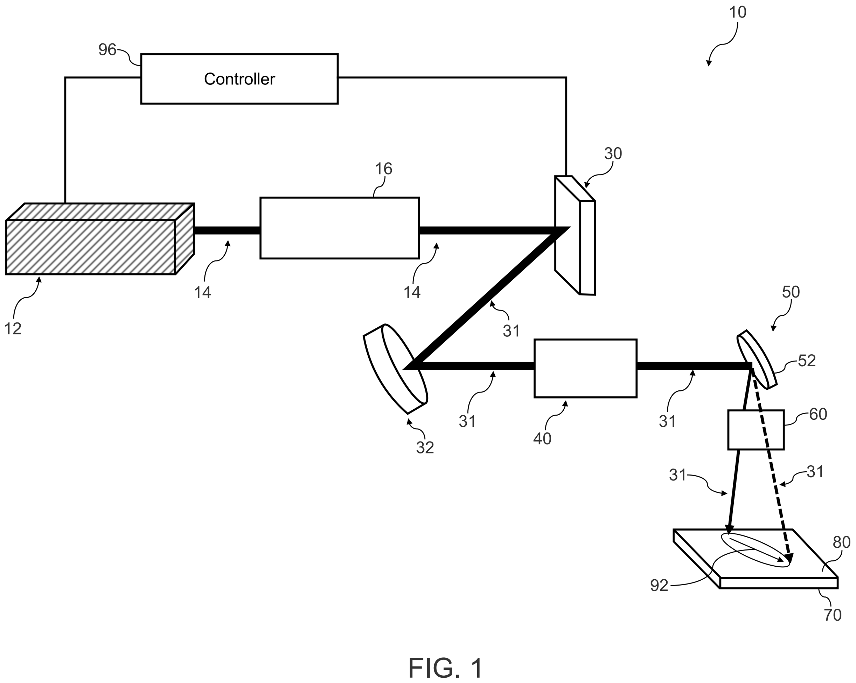

Referring now to FIG. 1, an exemplary embodiment of an apparatus 10 for additively manufacturing three-dimensional objects is illustrated. The apparatus 10 includes several components arranged to effectively generate a laser beam 14 that is manipulated and directed to form a three-dimensional object on a build platform 70. The apparatus 10 can be an additive manufacturing system or an additive manufacturing machine in some embodiments.

In exemplary embodiments, one or more laser beam sources 12 are configured to generate the laser beam 14. The one or more laser beam sources 12 can include various types of lasers suitable for additive manufacturing processes such as, by way of non-limiting example, fiber lasers or CO2 lasers, depending on the specific application requirements.

In exemplary embodiments, a beam shaping device 16 is located downstream from the one or more laser beam sources 12. The beam shaping device 16 is configured to alter the cross-sectional shape, size, and/or profile of the laser beam 14 to suit the needs of the particular additive manufacturing process. The beam shaping device 16 may include one or more optical elements used to collimate the laser beam 14, condition the laser beam 14, transform a profile of the laser beam 14, or convert a shape of the laser beam 14. This alteration can help in optimizing the energy distribution across the beam, thus enhancing the precision and quality of the manufactured object.

Downstream of the beam shaping device 16 are one or more modulation devices 30. In exemplary embodiments, the modulation device 30 is a spatial light modulator such as, by way of non-limiting example, a liquid crystal on silicon (LCoS) device, a digital micromirror device (DMD) or a MEMS device. The modulation device 30 is configured to change the amplitude, phase, and/or polarization of the laser beam 14 or wave front of the laser beam 14. The modulation device 30 is configured to change or modulate at least one laser beam parameter that influences the beam properties of the laser beam 14 emanating from or generated by the laser beam source 12. Therefore, the modulation device 30 is configured to change respective laser beam parameters (e.g., laser beams with particular beam properties) as to place and/or time, including any beam profiles such as, by way of non-limiting example, Gaussian or top hat profiles. By controlling the modulation device 30, the wave front of the laser beam 14 generated by the laser beam source 12 can be changed. Since the wave front significantly determines the beam profile, a changed wave front is typically associated with a changed beam profile of the laser beam 14. A changed wave front or beam profile can also be understood to mean a subdivision of a (single) wave front or a (single) beam profile of the laser beam 14 generated by the laser beam source 12 into several discrete beam profiles or wave fronts. Therefore, a laser beam with a (single) focus area can be generated into several laser beams with one focus area each via the modulation device 30.

Thus, the laser beam 14 is incident on the modulation device 30, and the modulation device 30 may be controlled to modulate or change the amplitude, phase, and/or polarization of the laser beam 14 or wave front of the laser beam 14 to output a modulated beam 31. Downstream from the modulation device 30, the laser beam 14 is incident upon a mirror device 32 due to a folded setup or arrangement of the apparatus 10. The mirror device 32 is configured to redirect or reflect the laser beam 14 towards to an optical relay device 40. The optical relay device 40 is disposed downstream of the modulation device 30 and the mirror device 32. The optical relay device 40 is configured to relay or transport the modulated laser beam 14 from the modulation device 30 over a particular distance to a deflection device 50. The optical relay device 40 ensures that the integrity and characteristics of the modulated laser beam 14 are maintained during transmission to the deflection device 50. In exemplary embodiments, the optical relay device 40 may include one or more optical elements such as, by way of non-limiting example, a 4f optical system or lens arrangement.

In the illustrated embodiment, downstream from the optical relay device 40 is the deflection device 50. The deflection device 50 may include, by way of non-limiting example, a galvo scanner device 52. In exemplary embodiments, the galvo scanner device 52 is configured to further direct or steer the modulated beam 31 across the build platform 70, which supports a powder bed 80. It should be understood that the deflection device 50 may, additionally or alternatively, be a gantry system, polygon scanner, or other type of scanning mechanism. In exemplary embodiments, the deflection device 50 may also include a focusing lens assembly 60 having one or more optical elements, such as lenses, mirrors, or the like, configured to focus the laser beam 14 onto the build platform 70. The build platform 70 supports the powder bed 80, which contains the build material in powder form that is to be fused by the laser beam 14. The modulated beam 31 may be scanned or directed across the powder bed via a scanning path 92, controlled by the deflection device 50, to ensure that the modulated beam 31 follows a predetermined path over the surface of the powder bed 80, dictated by the desired geometry of the object being manufactured. It should also be understood that in exemplary embodiments, the deflection device 50 may be a gantry system configured to move the one or more modulation devices 30 with respect to the build platform 70 to scan or steer the modulated beam 31 across the powder bed 80. Thus, in such exemplary embodiments, one or more of the optical components located downstream of the one or more modulation devices 30 may be omitted.

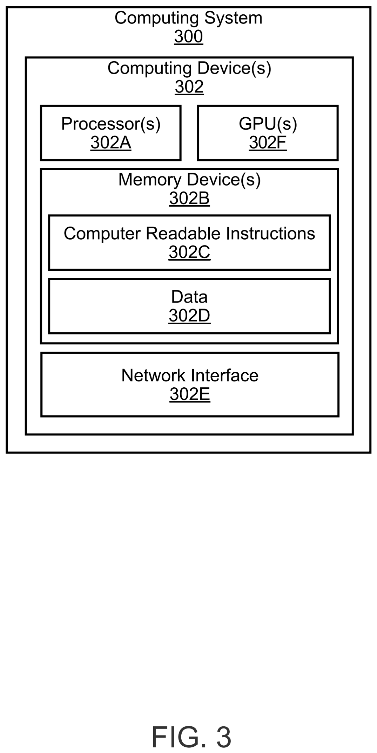

In the illustrated embodiment, one or more controllers 96 are communicatively coupled to the one or more laser beam sources 12, the one or more beam shaping devices 16, the one or more modulation devices 30, and the one or more deflection devices 50. The one or more controllers 96 are configured to generate control signals to selectively control the activation and/or operating parameters of the one or more laser beam sources 12, the conditioning or shaping of the laser beam 14 via the one or more beam shaping devices 16, the modulation state of the one or more modulation devices 30 to produce the modulated beam 31, and the scanning of the modulated beam 31 over the powder bed 80 via the deflection device 50. The controller 96 may be configured similar to exemplary computing devices of the computing system 300 described below with reference to FIG. 3.

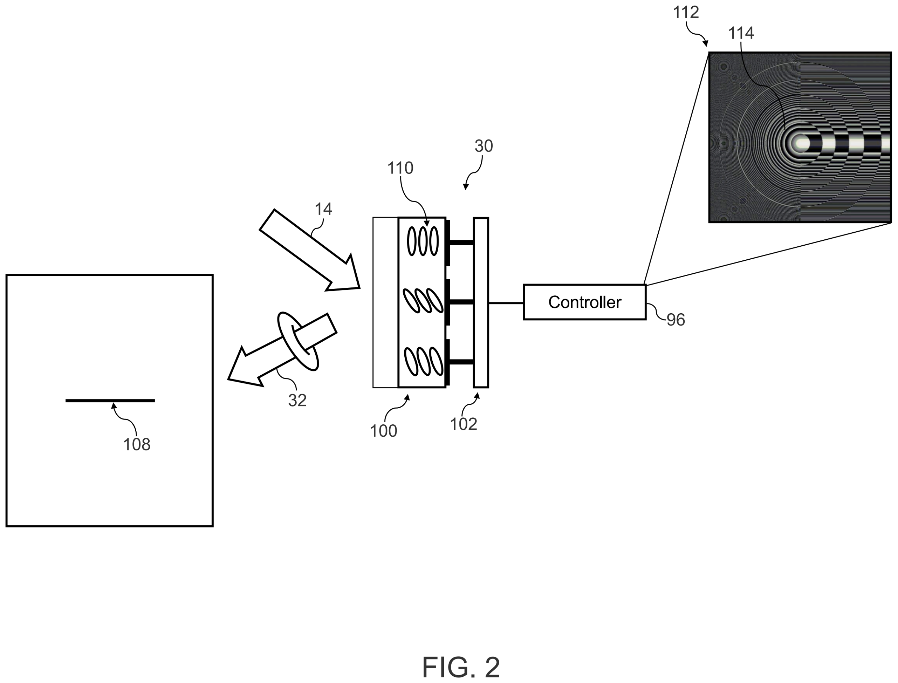

FIG. 2 is a schematic diagram depicting a portion of the apparatus 10 of FIG. 1. In the illustrated embodiment, the modulation device 30 includes a modulation layer 100 and a complementary metal oxide semiconductor (CMOS) layer 102. The modulation layer 100 includes an array of modulation elements 110 that are individually controllable to modulate the phase, amplitude and/or polarization state of at least a portion of the laser beam 14 incident of the particular modulation element 110. In the illustrated embodiment, the modulation device 30 is an LCoS. Therefore, the modulation elements 110 depicted in FIG. 2 are liquid crystal elements. The array of modulation elements 110 may be defined in a two-dimensional space each having an X coordinate value and a Y coordinate value. Each modulation element 110 or pixel of the modulation device 30 is individually controllable such that the modulated beam 31 has a defined wavefront pattern based on the modulation state of the respective modulation elements 110.

In the illustrated embodiment, the controller 96 is communicatively coupled to the modulation device 30. The controller 96 may receive as input a target or defined light pattern or wavefront pattern 108 to be used to melt, fuse, or consolidate a powder build material, such as the powder bed 80 (FIG. 1), with the modulated beam 31. The target wavefront pattern 108 may be input to the controller 96 via, by way of non-limiting example, a data file, image file, and/or digital video interface (DVI) signal. The wavefront pattern 108 may have high energy values and low energy values based on a summation of two or more waveforms. In exemplary embodiments, the controller 96 is configured to conduct parallel processing image calculations to create or generate one or more output images 112 to reverse match, within a defined threshold, the input wavefront pattern 108 desired for the modulated beam 31. The one or more output images 112 may be a representation of a Fourier field and include an array of pixels 114 each having a respective pixel value, which may be in the form of a bitmap representing the pixel values. In exemplary embodiments, the array of pixels 114 corresponds to the array of modulation elements 110 of the modulation device 30. The pixel values for the respective pixels 114 may define an intensity level for a respective pixel (e.g., a grayscale value between 0 and 255) such that the pixel value is used to define the modulation state of a respective modulation element 110 of the modulation device 30 (e.g., a zero ("0") grayscale value (e.g., white) representing a low intensity, and a two hundred fifty-five ("255") grayscale value (e.g., black) representing a high intensity value). Thus, in operation, the pixel value for a respective pixel 114 in the output image 112 is used by the controller 96 to define or control the modulation state of the respective modulation element 110 of the modulation device 30.

In exemplary embodiments, the controller 96 is configured to perform one or more Fast Fourier Transform (FFT) calculations to generate bitmaps corresponding to the one or more output images 112. In exemplary embodiments, the FFT calculations are performed via at least one of a graphics processing unit (GPU) or integrated circuit such that vector computing is used to derive the pixel values for the pixels 114 of the one or more output images 112. Thus, the FFT calculations defining a pixel value for each pixel 114 of the output image 112 can be performed simultaneously, as opposed to scalar computing which would operate on a single data element at a time.

The controller 96 may also be configured to compare the respective output images 112 to the input wavefront pattern 108 to determine whether the output image 112 defines a wavefront pattern within a particular threshold of the input wavefront pattern 108. The threshold may be defined as whether the modulated beam 31 would be melting or not melting the powder build material in a location corresponding to the respective pixel 114 for the input wavefront pattern 108. In exemplary embodiments, a number of FFT calculation iterations may be performed by the controller 96 generating a respective number of output images 112 before producing a particular output image 112 that is within a threshold of or closely matches the input target wavefront pattern 108. In other words, as a particular output image 112 is generated, the output image 112 may be compared to the input target wavefront pattern 108, and if the output image 112 is not within the threshold of the input target wavefront pattern 108, another iteration of the FFT calculations may be performed to generate a subsequent output image 112. The subsequent output image 112 may be compared to the previous output image 112 to determine differences between the previous and subsequent output images 112 to assess whether the subsequent output image 112 produces pixel values for respective pixels 114 to generate a melt pattern corresponding to the input target wavefront pattern 108. Additional FFT calculation iterations may be performed until a particular output image 112 is generated that provides pixel values within an acceptable threshold of the input target wavefront pattern 108.

FIG. 3 provides an example computing system 300 according to example embodiments of the present disclosure. The computing devices or elements described herein, such as the controller 96 (FIGS. 1 and 2), may include various components and perform various functions of the computing system 300 described below, for example.

As shown in FIG. 3, the computing system 300 can include one or more computing device(s) 302. The computing device(s) 302 can include one or more processor(s) 302A, one or more graphics processing unit(s) (GPU(s)) 302F, and one or more memory device(s) 302B. The one or more processor(s) 302A can include any suitable processing device, such as a microprocessor, microcontroller, integrated circuit, logic device, and/or other suitable processing device. The one or more processor(s) 302A may be a central processing unit (CPU). The one or more GPU(s) 302F can be a specialized processor configured to repeatedly perform one or more operations. The one or more GPU(s) 302F can also be specialized to perform display functions and/or graphics processing. Furthermore, the one or more GPU(s) 302F can include a plurality of processor cores to facilitate repeatedly performing the one or more operations. The one or more GPU(s) 302F can be configured to process data at a faster rate than the one or more processor(s) 302A. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A and/or the one or more GPU(s) 302F, including computer-readable instructions 302C that can be executed by the one or more processor(s) 302A and/or the one or more GPU(s) 302F. The computer-readable instructions 302C can be any set of instructions that when executed by the one or more processor(s) 302A and/or the one or more GPU(s) 302F, cause the one or more processor(s) 302A and/or the one or more GPU(s) 302F to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as generating the laser beam 14, conditioning the laser beam 14, controlling the modulation states of the one or more modulation devices 30, defining a target light pattern to be output by the one or more modulation devices 30 as the modulated beam 31, and scanning of the modulated beam 31 over the powder bed 80 by the deflection device 50. In some embodiments, the computer-readable instructions 302C can be executed by the one or more GPU(s) 302F to cause the one or more GPU(s) 302F to perform operations, such as any of the operations and functions for which the computing system 300 and/or the computing device(s) 302 are configured, such as calculating Fast Fourier Transforms to produce an image corresponding to a target light pattern to be output by the one or more modulation devices 30 as the modulated beam 31. The computer-readable instructions 302C can be software written in any suitable programming language or can be implemented in hardware. Additionally, and/or alternatively, the computer-readable instructions 302C can be executed in logically and/or virtually separate threads on processor(s) 302A and/or GPU(s) 302F. The memory device(s) 302B can further store data 302D that can be accessed by the processor(s) 302A and/or the GPU(s) 302F. For example, the data 302D can include models, lookup tables, databases, etc. The data 302D can include image data corresponding to a target light pattern to be output by the one or more modulation devices 30 as the modulated beam 31. The data 302D can include data corresponding to, by way of non-limiting example, an array of pixels defined by and/or corresponding to an array of modulation elements of the one or more modulation devices 30. The data 302D can include Fast Fourier Transform calculation data.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

In exemplary embodiments, data corresponding to the target wavefront pattern 108 may be input to the one or more GPU(s) 302F such as, by way of non-limiting example, by the one or more processors 302A, and the one or more GPU(s) 302F perform one or more FFT calculations and output data corresponding to one or more of the output images 112 (FIG. 2) to reverse match the target wavefront pattern 108 (FIG. 2). As indicated above, the one or more GPU(s) 302F can perform vector computing to derive the pixel values for the pixels 114 (FIG. 2) of the one or more output images 112 (FIG. 2). The one or more processors 302A may be used to evaluate the one or more output images 112 (FIG. 2) to the target wavefront pattern 108 (FIG. 2) and, if needed, initiate additional iterations of the FFT calculations via the one or more GPU(s) 302F to obtain at least one output image 112 (FIG. 2) having pixel values within a defined threshold of the target wavefront pattern 108 (FIG. 2). Data corresponding to the output image 112 (FIG. 2) is used by the one or more processors 302A to control the modulation state of the modulation device 30 (FIGS. 1 and 2) to generate the modulated beam 31 (FIGS. 1 and 2) with the requested wavefront. In exemplary embodiments, a complex pattern of multiple points is generated simultaneously using a vector approach to generate a hologram that displays the pattern formed by the multiple points. In exemplary embodiments, dimensions of the hologram, wavelength, and focal length may be defined and memory allocated on the GPU(s) 302F. An array of tuples representing the points may also be defined. A kernel for computing the hologram is loaded and launched on the GPU(s) 302F, and the kernel processes each pixel 114 (FIG. 2) in parallel (e.g., the kernel processes the FFT calculations in parallel using the GPU(s) 302F vector processing capabilities). The kernel function computes the phase shift for each pixel 114 (FIG. 2) in parallel using the GPU(s) 302F, sums the contributions from multiple points, and creates the pattern. The result may be copied back to the processor(s) 302A.

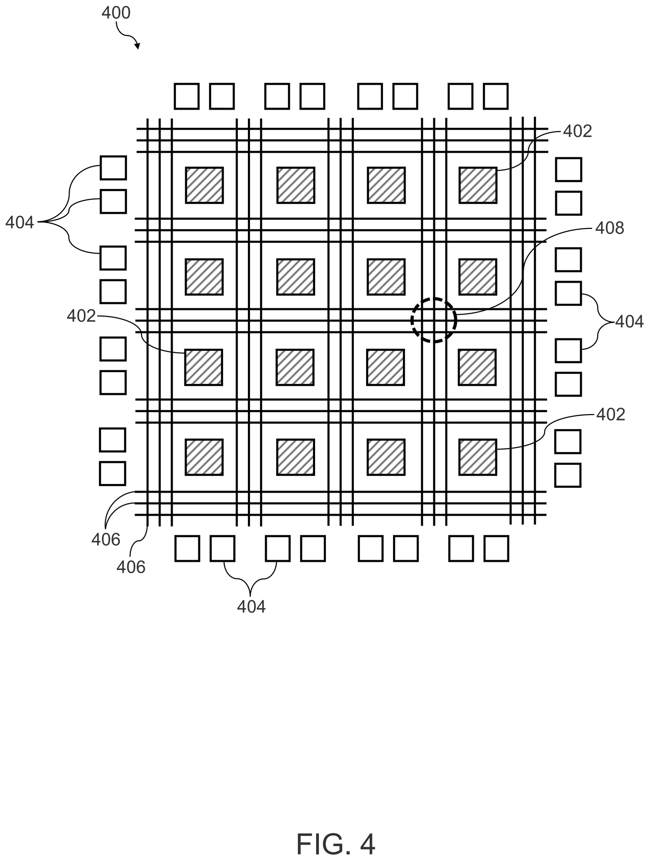

FIG. 4 is a block diagram depicting at least a portion of an exemplary field-programmable gate array (FPGA) module 400 which can include aspects of the present disclosure. Although a FPGA module 400 is depicted in FIG. 4, it should be understood that embodiments of the present disclosure may be implemented in other types of programmable integrated circuits such as, by way of non-limiting example, programmable logic devices (PLDs), Programmable Array Logic (PAL), or Programmable Logic Arrays (PLAs). The FPGA module 400 may be implemented as part of the computing system 300 (FIG. 3). The FPGA module 400 may be configured centralized in a single integrated circuit or distributed among different chips in a data processing system). Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." The computing system 300 incorporating the FPGA module 400 may be part of the modulation device 30 (FIGS. 1 and 2), part of the controller 96 (FIGS. 1 and 2), or part of a separate and distinct data processing system.

The FPGA module 400 is an integrated circuit that can be used to create a user-designed arbitrary logic circuit. The FPGA module 400 includes a plurality of logic blocks 402, a plurality of input/output (I/O) blocks 404, and programmable routing 406 operatively coupled with the logic blocks 402 and the I/O blocks 404. The programmable routing 406 is often organized as rows and columns of wiring, with a configurable switch matrix 408 included at each (or at least a subset of) row and column intersections. The programmable routing 406 is used to interconnect select logic blocks 402 and I/O blocks 404 according to a desired circuit topology to be implemented on the FPGA module 400. I/O blocks 404 provide an interface between the various logic blocks 402 on the FPGA module 400 and circuitry external to the FPGA module 400. An I/O block 404 may include, for example, such circuits as I/O buffers, voltage level converters, analog-to-digital converters (ADCs), digital-to-analog converters (DACs), and the like.

Each of the logic blocks 402 in the exemplary embodiment shown in FIG. 4 preferably comprises logic resources that can perform logic functions. The logic resources are often grouped to create configurable logic blocks. A configurable logic block may include a prescribed number of look-up tables (LUTs), flip-flops (FFs), and multiplexers. A LUT is an FPGA primitive comprising a collection of logic gates hard-wired on the FPGA that store a predefined list of outputs for every combination of inputs and provides a fast means of retrieving the output as a logic operation. A flip-flop is a circuit capable of two stable states and represents a single bit. A multiplexer is a circuit that selects between two or more inputs (e.g., an output of LUT or an output of a flip-flop), via one or more control inputs (not explicitly shown), and generates, as an output thereof, the selected input. It is to be appreciated that embodiments of the present disclosure are not limited to any specific circuitry and/or connection arrangement of the LUTs.

Thus, in exemplary embodiments, the target wavefront pattern 108 may be input to one or more FPGA modules 400, and the one or more FPGA modules 400 programmed to perform one or more FFT calculations and output data corresponding to one or more of the output images 112 (FIG. 2) to reverse match the target wavefront pattern 108 (FIG. 2). As indicated above, the one or more FPGA modules 400 can perform vector computing to derive the pixel values for the pixels 114 (FIG. 2) of the one or more output images 112 (FIG. 2). The one or more processors 302A may be used to evaluate the one or more output images 112 (FIG. 2) to the target wavefront pattern 108 (FIG. 2) and, if needed, initiate additional iterations of the FFT calculations via the one or more FPGA modules 400 to obtain at least one output image 112 (FIG. 2) having pixel values within a defined threshold of the target wavefront pattern 108 (FIG. 2). Data corresponding to the output image 112 (FIG. 2) is used by the one or more processors 302A to control the modulation state of the modulation device 30 (FIGS. 1 and 2) to generate the modulated beam 31 (FIGS. 1 and 2) having the requested wavefront pattern 108 (FIG. 2).

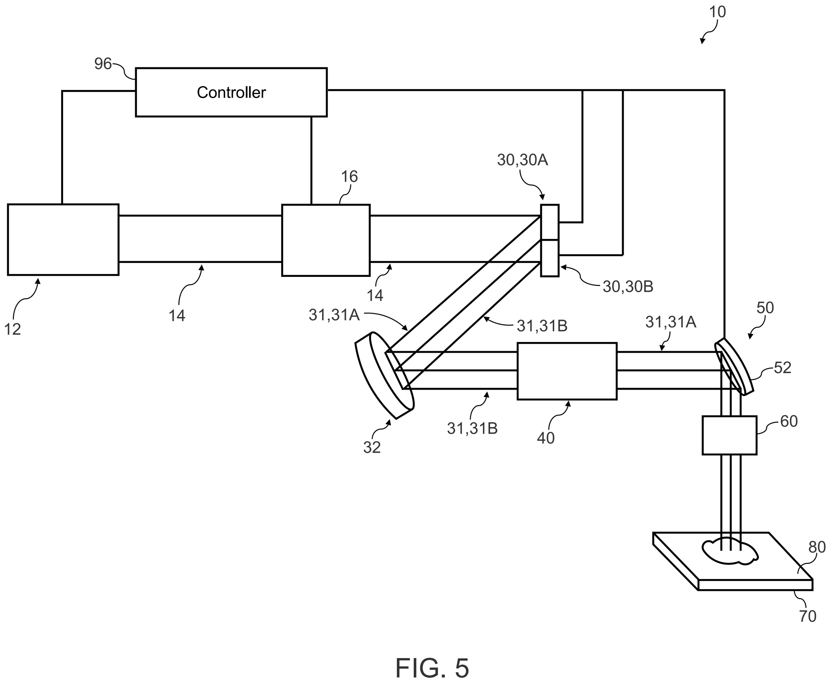

FIG. 5 schematically depicts another exemplary embodiment of the apparatus 10 for additively manufacturing three-dimensional objects according to the present disclosure. The apparatus 10 may be at least partly configured similar to the apparatus 10 depicted in FIG. 1, where like numerals are utilized to refer to like elements. In the illustrated embodiment, the apparatus 10 includes two or more modulation devices 30, indicated as modulation devices 30A and 30B in FIG. 5. In exemplary embodiments, the one or more laser beam sources 12 are configured to generate the one or more laser beams 14, and the one or more laser beams 14 are incident on the modulation devices 30A, 30B. The modulation device 30A generates or outputs a modulated beam 31A, and the modulation device 30B generates or outputs a modulated beam 31B. The modulated beams 31A, 31B are combined or "work together" to produce the wavefront pattern 108 with a higher resolution than the resolution obtained by a single modulation device 30. In exemplary embodiments, a desired output resolution of the modulated beams 31A, 31B can be calculated across regions of the modulation devices 30A, 30B regions to interact in such a way that their respective wavefronts can be shifted by up to 2π with respect to each other, and if calculated to a fraction of π, can be shifted in such a way as to achieve higher resolution than the native pixels of a single modulation device 30 can achieve. In exemplary embodiments, Fourier calculations are performed for the modulation states of respective modulation elements 110 (FIGS. 1 and 2) of the respective modulation devices 30A, 30B to obtain phase generation for the respective modulated beams 31A, 31B that are combined or work together to produce the higher resolution of the wavefront pattern 108 (FIG. 2).

In exemplary embodiments, an array of two identically sized regions or areas of modulation elements 110 (FIGS. 1 and 2) of the respective modulation devices 30A, 30B can achieve approximately ½ pixel resolution when covering the same field of view when their phase timing is adjusted. The adjusted phase timing can be attained by adjusting the Fourier field calculations to include a ½ pixel offset with respect to each other for the respective regions. In exemplary embodiments, for each increase in the number (n) of regions, a 1/n resolution step increase in capability is achieved. The regions of the respective modulation devices 30A, 30B can include the entirety of the modulation elements 110 (FIGS. 1 and 2) of the respective modulation devices 30A, 30B or may be sub-regions of the respective modulation devices 30A, 30B such that a sub-region contains a quantity or area of modulation elements 110 (FIGS. 1 and 2) of the respective modulation devices 30A, 30B less than a total quantity or area of modulation elements 110 (FIGS. 1 and 2) available on the respective modulation devices 30A, 30B.

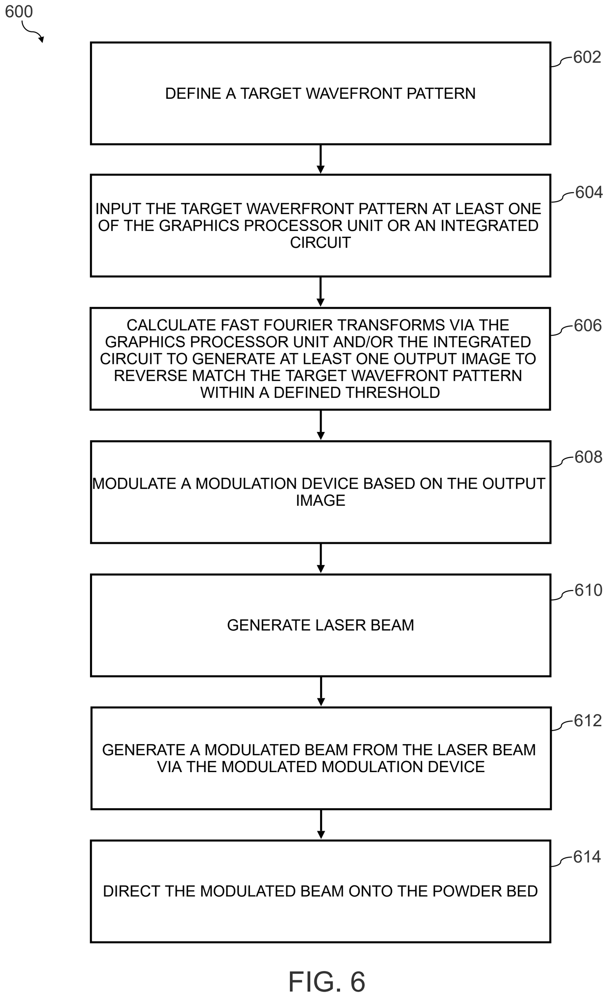

Referring now to FIG. 6, a flow diagram is presented depicting an exemplary embodiment of a method 600 for additively manufacturing three-dimensional objects in accordance with various aspects of the present disclosure. The method 600 illustrates a series of steps designed to control the characteristics of a laser beam in a manner that optimizes the additive manufacturing process, thereby enhancing the quality and precision of the manufactured objects.

A step 602 of the method 600 involves defining the target wavefront pattern 108 for melting, fusing, or consolidating a powder build material. At step 604, the method 600 includes inputting the target wavefront pattern 108 to at least one of a GPU or an integrated circuit, such as the GPU 302F or the FPGA module 400. At step 606, the method 600 includes calculating FFTs via the GPU and/or the integrated circuit to generate at least one output image 112 to reverse match the target wavefront pattern 108 within a defined threshold. The step 606 may include comparing the one or more output images 112 to the requested target wavefront pattern 108. At step 608, the method 600 includes modulating the modulation device 30 based on the output image 112. At step 610, the method 600 includes generating the laser beam 14 via the one or more laser beam sources 12. At step 612, generating the modulated beam 31 from the laser beam 14 via the modulation device 30. At step 614, the method 600 includes directing the modulated beam 31 to a target build plane, such as the powder bed 80.

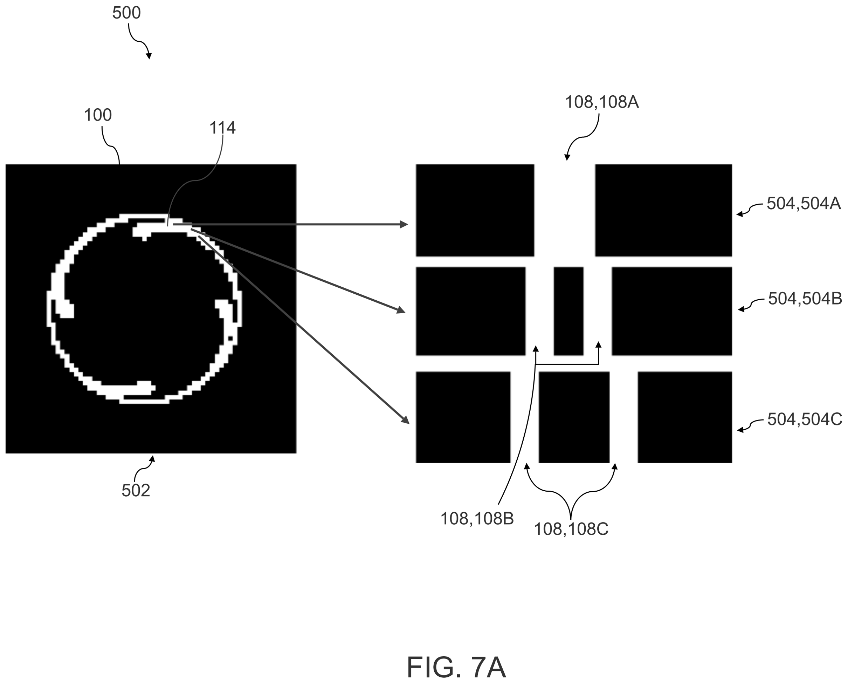

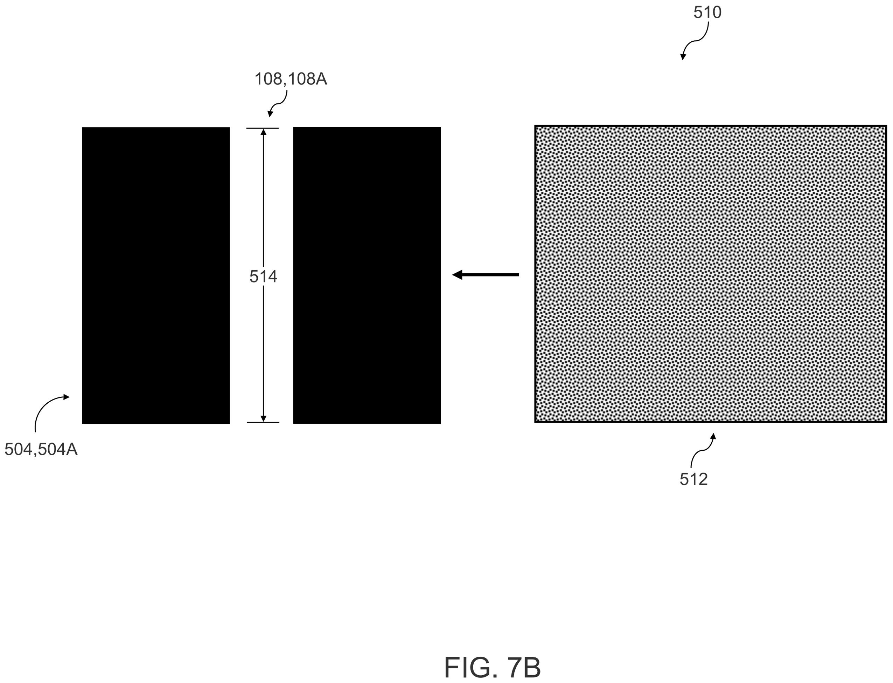

FIGS. 7A-7D are schematic diagrams depicting various stages of the formation of one or more of the output images 112 (FIG. 2) according to an embodiment of the present disclosure. The stages of the formation of the one or more output images 112 (FIG. 2) depicted by FIGS. 7A-7D may be performed by the controller 96 (FIGS. 1 and 2) and/or the one or more computing systems 300 (FIG. 3) such as, by way of non-limiting example, the one or more GPUs 302F (FIG. 3) or the one or more FPGA modules 400 (FIG. 4). FIG. 7A depicts a stage 500 where an input image 502 defining the target wavefront pattern 108 includes one or more rows 504 of the pixels 114. Although the input image 502 may have many rows 504, three rows 504 are depicted in FIG. 7A identified as rows 504A, 504B, 504C. In the illustrated embodiment, each of the rows 504A, 504B, 504C depict the target wavefront pattern 108 for the corresponding row 504, indicated respectively by wavefront patterns 108A, 108B, 108C. In exemplary embodiments, the controller 96 (FIGS. 1 and 2) is configured to select one or the rows 504 for creating the output image 112 (FIG. 2) for the selected row 504. As an example, consider that row 504A is selected for the remainder of the description in connection with FIGS. 7B-7D.

FIG. 7B depicts a stage 510 following the stage 500 (FIG. 7A). At the stage 510, the controller 96 (FIGS. 1 and 2) is configured to perform one or more FFT calculations to create a Fourier field 512 corresponding to the row 504A where an energy representation corresponding to the wavefront pattern 108 is extended to a column 514 representing at least a portion of a columnar length of the modulation device 30 (FIGS. 1 and 2).

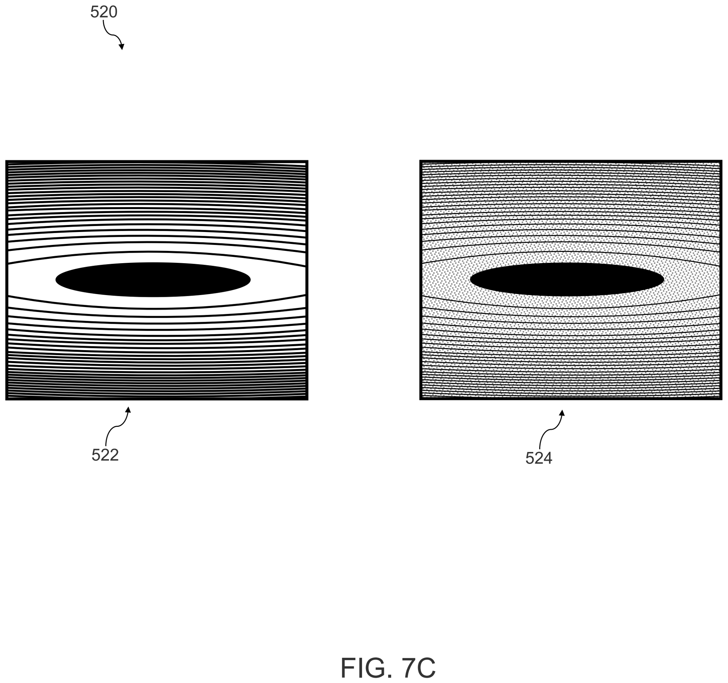

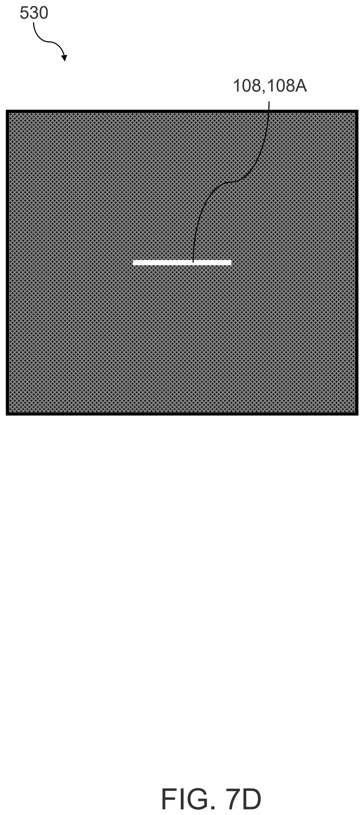

FIG. 7C depicts a stage 520 following the stage 510. At the stage 520, the Fourier field 512 (FIG. 7B) is summed with a precomputed Fourier field 522 representing a lens such as, by way of non-limiting example, a cylindrical lens, to produce a row image 524 as the output image 112 (FIG. 2). In other words, the row image 524 includes bitmap data used by the controller 96 (FIGS. 1 and 2) to control the modulation state of the modulation device 30 (FIGS. 1 and 2) to product the wavefront pattern 108A (FIG. 7A) for the row 504A. FIG. 7D depicts a stage 530 following the stage 520. At the stage 530, the modulated beam 31 (FIGS. 1 and 2) having the wavefront pattern 108A may be directed onto the powder bed 80 (FIG. 1) to consolidate the powder build material to form a portion of the three-dimensional object corresponding to the row 504A (FIG. 7A). The stages 500, 510, 520, and 530 may be repeated for additional rows 504 of the input image 502.

Thus, in exemplary embodiments, the present disclosure can be used to control a modulation device to produce phase only holographic images instead of traditional light only images at high rates of speed. Embodiments of the present disclosure also increase the accuracy of the output based on the input image. In exemplary embodiments, an optical wave phase delay (of up to 2π) enables the reflected light from a modulation device to produce interference patterns of either constructive or destructive light, to form a pattern of energy distribution by producing vertical segments or columns needed to form a line of energy (e.g., representing a single horizontal line of the desired output image) and collapsing that vertical energy into the subsequent horizontal line. Embodiments of the present disclosure can combine two or more modulation devices to work together using Fourier phase generation techniques to produce a higher resolution of pixels of a defined singular region that can be produced by a single modulation device.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

An apparatus for additively manufacturing three-dimensional objects, the apparatus comprising: one or more laser beam sources configured to generate a laser beam; one or more modulation devices disposed downstream of the one or more laser beam sources and configured to receive the laser beam and modulate the laser beam to generate a modulated beam; and one or more computing systems configured to generate one or more output images based on an input to the one or more computing systems of a wavefront pattern, wherein the one or more output images are generated by at least one of a graphics processing unit (GPU) or an integrated circuit, and wherein the one or more computing systems are configured to control the one or more modulation devices to generate the modulated beam with the wavefront pattern based on at least one output image of the one or more output images.

The apparatus of previous clause, wherein the one or more computing systems are configured to perform one or more Fast Fourier Transform (FFT) calculations to generate the one or more output images.

The apparatus of any previous clause, wherein the one or more computing systems are configured to perform a plurality of iterations of the one or more FFT calculations to generate the at least one output image within a threshold of the input of the wavefront pattern.

The apparatus of any previous clause, wherein the one or more output images comprise a bitmap defining an array of pixel values corresponding to an array of modulation elements of the one or more modulation devices, and wherein the one or more computing systems are configured to control the one or more modulation elements to generate the modulated beam with the wavefront pattern based on the bitmap.

The apparatus of any previous clause, wherein the integrated circuit comprises one or more field-programmable gate array (FPGA) modules.

The apparatus of any previous clause, wherein the one or more computing systems are configured to compare the one or more output images to the wavefront pattern.

The apparatus of any previous clause, wherein the one or more modulation devices comprise a first modulation device and a second modulation device, and wherein the modulated beam comprises a first modulated beam generated by the first modulation device and a second modulated beam generated by the second modulation device, and wherein the first and second modulated beams combine to form the wavefront pattern on a powder bed.

The apparatus of any previous clause, wherein: the first modulated beam is generated by at least a first sub-region of the first modulation device, the first sub-region defining a first quantity of modulation elements of the first modulation device less than a total quantity of modulation elements of the first modulation device; and the second modulated beam is generated by at least a second sub-region of the second modulation device, the second sub-region defining a second quantity of modulation elements of the second modulation device less than a total quantity of modulation elements of the second modulation device.

The apparatus of any previous clause, wherein an area of the first sub-region is sized equal to an area of the second sub-region.

The apparatus of any previous clause, wherein at least one of the first and second modulation devices is configured to shift a wavefront of the first modulated beam by up to 2π with respect to a wavefront of the second modulated beam.

The apparatus of any previous clause, wherein the one or more computing systems are configured to generate at least one control signal to control a modulation state of the one or more modulation devices based on the at least one output image.

The apparatus of any previous clause, wherein the one or more computing system are configured to: select a row of pixels from the input of the wavefront pattern; calculate a first Fourier field for the row; convert the first Fourier field into one or more columns of an energy representation extending over at least a portion of the modulation device; collapse the one or more columns of the energy representation into a row image by summing the one or more columns of the energy representation with a second Fourier field representing a lens; and output the row image as the at least one output image.

A method for additively manufacturing three-dimensional objects, the method comprising: defining a wavefront pattern to be directed onto a powder bed; inputting the wavefront pattern into one or more computing systems; generating, via the one or more computing systems via at least one of a graphics processing unit (GPU) or an integrated circuit, one or more output images to reverse match the wavefront pattern within a threshold; modulating one or more modulation devices based on at least one output image of the one or more output images; generating a laser beam; modulating the laser beam via the one or more modulation devices to generate a modulated beam having the wavefront pattern; and directing the modulated beam onto a powder bed.

The method of any previous clause, further comprising performing, via at least one of the GPU or the integrated circuit, one or more Fast Fourier Transform (FFT) calculations to generate the one or more output images.

The method of any previous clause, wherein generating the one or more output images comprises: generating a first output image of the one or more output images; determining whether the first output image is within the threshold of the wavefront pattern; and in response to the first output image being outside the threshold, performing one or more iterations of the FFT calculations to generate one or more additional output images.

The method of any previous clause, further comprising comparing, via the one or more computing systems, the one or more output images to the wavefront pattern.

The method of any previous clause, wherein the one or more modulation devices comprise a first modulation device and a second modulation device, and wherein the modulated beam comprises a first modulated beam and a second modulated beam, and further comprising: modulating the first modulation device to generate the first modulated beam; modulating the second modulation device to generate the second modulated beam; and combining the first and second modulated beams to form the wavefront pattern on the powder bed.

The method of any previous clause, further comprising: generating the first modulated beam by at least a first sub-region of the first modulation device, the first sub-region defining a first quantity of modulation elements of the first modulation device less than a total quantity of modulation elements of the first modulation device; and generating the second modulated beam by at least a second sub-region of the second modulation device, the second sub-region defining a second quantity of modulation elements of the second modulation device less than a total quantity of modulation elements of the second modulation device.

A non-transitory computer-readable medium comprising computer-executable instructions, which, when executed by a processor associated with an additive manufacturing machine, cause the processor to perform a method comprising: inputting a wavefront pattern into one or more computing systems; generating, via the one or more computing systems via at least one of a graphics processing unit (GPU) or an integrated circuit, one or more output images to reverse match the wavefront pattern within a threshold; modulating one or more modulation devices based on at least one output image of the one or more output images; generating a laser beam; modulating the laser beam via the one or more modulation devices to generate a modulated beam having the wavefront pattern; and directing the modulated beam onto a powder bed.

The non-transitory computer-readable medium of any previous clause, wherein the one or more modulation devices comprise a first modulation device and a second modulation device, and wherein the modulated beam comprises a first modulated beam and a second modulated beam, and wherein the computer-executable instructions, which when executed by the processor, causes the processor to perform the method comprising: modulating the first modulation device to generate the first modulated beam; modulating the second modulation device to generate the second modulated beam; and combining the first and second modulated beams to form the wavefront pattern on the powder bed.

Various aspects and embodiments of the invention are defined by the following clauses:
1. An apparatus for additively manufacturing three-dimensional objects, the apparatus comprising:
   one or more laser beam sources configured to generate a laser beam;
   one or more modulation devices disposed downstream of the one or more laser beam sources and configured to receive the laser beam and modulate the laser beam to generate a modulated beam; and
   one or more computing systems configured to generate one or more output images based on an input to the one or more computing systems of a wavefront pattern, wherein the one or
   more output images are generated by at least one of a graphics processing unit (GPU) or an integrated circuit, and wherein the one or more computing systems are configured to control the one or more modulation devices to generate the modulated beam with the wavefront pattern based on at least one output image of the one or more output images.
2. The apparatus of clause 1, wherein the one or more computing systems are configured to perform one or more Fast Fourier Transform (FFT) calculations to generate the one or more output images.
3. The apparatus of clause 2, wherein the one or more computing systems are configured to perform a plurality of iterations of the one or more FFT calculations to generate the at least one output image within a threshold of the input of the wavefront pattern.
4. The apparatus of clause 1, wherein the one or more output images comprise a bitmap defining an array of pixel values corresponding to an array of modulation elements of the one or more modulation devices, and wherein the one or more computing systems are configured to control the one or more modulation elements to generate the modulated beam with the wavefront pattern based on the bitmap.
5. The apparatus of clause 1, wherein the integrated circuit comprises one or more field-programmable gate array (FPGA) modules.
6. The apparatus of clause 1, wherein the one or more computing systems are configured to compare the one or more output images to the wavefront pattern.
7. The apparatus of clause 1, wherein the one or more modulation devices comprise a first modulation device and a second modulation device, and wherein the modulated beam comprises a first modulated beam generated by the first modulation device and a second modulated beam generated by the second modulation device, and wherein the first and second modulated beams combine to form the wavefront pattern on a powder bed.
8. The apparatus of clause 7, wherein:
   the first modulated beam is generated by at least a first sub-region of the first modulation device, the first sub-region defining a first quantity of modulation elements of the first modulation device less than a total quantity of modulation elements of the first modulation device; and
   the second modulated beam is generated by at least a second sub-region of the second modulation device, the second sub-region defining a second quantity of modulation elements of the second modulation device less than a total quantity of modulation elements of the second modulation device.
9. The apparatus of clause 8, wherein an area of the first sub-region is sized equal to an area of the second sub-region.
10. The apparatus of clause 7, wherein at least one of the first and second modulation devices is configured to shift a wavefront of the first modulated beam by up to 2π with respect to a wavefront of the second modulated beam.
11. The apparatus of clause 1, wherein the one or more computing systems are configured to generate at least one control signal to control a modulation state of the one or more modulation devices based on the at least one output image.
12. The apparatus of clause 1, wherein the one or more computing systems are configured to:
   select a row of pixels from the input of the wavefront pattern;
   calculate a first Fourier field for the row;
   convert the first Fourier field into one or more columns of an energy representation extending over at least a portion of at least one modulation device of the one or more modulation devices;
   collapse the one or more columns of the energy representation into a row image by summing the one or more columns of the energy representation with a second Fourier field representing a lens; and
   output the row image as the at least one output image.
13. A method for additively manufacturing three-dimensional objects, the method comprising:
   defining a wavefront pattern to be directed onto a powder bed;
   inputting the wavefront pattern into one or more computing systems;
   generating, via the one or more computing systems via at least one of a graphics processing unit (GPU) or an integrated circuit, one or more output images to reverse match the wavefront pattern within a threshold;
   modulating one or more modulation devices based on at least one output image of the one or more output images;
   generating a laser beam;
   modulating the laser beam via the one or more modulation devices to generate a modulated beam having the wavefront pattern; and
   directing the modulated beam onto a powder bed.
14. The method of clause 13, further comprising performing, via at least one of the graphics processing unit (GPU) or the integrated circuit one, Fast Fourier Transform (FFT) calculations to generate the one or more output images.
15. The method of clause 14, wherein generating the one or more output images comprises:
   generating a first output image of the one or more output images;
   determining whether the first output image is within the threshold of the wavefront pattern;
   and in response to the first output image being outside the threshold, performing one or more iterations of the FFT calculations to generate one or more additional output images.
16. The method of clause 13, further comprising comparing, via the one or more computing systems, the one or more output images to the wavefront pattern.
17. The method of clause 13, wherein the one or more modulation devices comprise a first modulation device and a second modulation device, and wherein the modulated beam comprises a first modulated beam and a second modulated beam, and further comprising:
   modulating the first modulation device to generate the first modulated beam;
   modulating the second modulation device to generate the second modulated beam; and
   combining the first and second modulated beams to form the wavefront pattern on the powder bed.
18. The method of clause 17, further comprising:
   generating the first modulated beam by at least a first sub-region of the first modulation device, the first sub-region defining a first quantity of modulation elements of the first modulation device less than a total quantity of modulation elements of the first modulation device; and
   generating the second modulated beam by at least a second sub-region of the second modulation device, the second sub-region defining a second quantity of modulation elements of the second modulation device less than a total quantity of modulation elements of the second modulation device.
19. A non-transitory computer-readable medium comprising computer executable instructions, which, when executed by a processor associated with an additive manufacturing machine, cause the processor to perform a method comprising:
   inputting a wavefront pattern into one or more computing systems;
   generating, via the one or more computing systems via at least one of a graphics processing unit (GPU) or an integrated circuit, one or more output images to reverse match the wavefront pattern within a threshold;
   modulating one or more modulation devices based on at least one output image of the one or more output images;
   generating a laser beam;
   modulating the laser beam via the one or more modulation devices to generate a modulated beam having the wavefront pattern; and
   directing the modulated beam onto a powder bed.
20. The non-transitory computer-readable medium of clause 19, wherein the one or more modulation devices comprise a first modulation device and a second modulation device, and wherein the modulated beam comprises a first modulated beam and a second modulated beam, and wherein the computer-executable instructions, which when executed by the processor, causes the processor to perform the method comprising:
   modulating the first modulation device to generate the first modulated beam;
   modulating the second modulation device to generate the second modulated beam; and
   combining the first and second modulated beams to form the wavefront pattern on the powder bed.

## Claims

1. An apparatus for additively manufacturing three-dimensional objects, the apparatus comprising:
one or more laser beam sources configured to generate a laser beam;
one or more modulation devices disposed downstream of the one or more laser beam sources and configured to receive the laser beam and modulate the laser beam to generate a modulated beam; and
one or more computing systems configured to generate one or more output images based on an input to the one or more computing systems of a wavefront pattern, wherein the one or more output images are generated by at least one of a graphics processing unit (GPU) or an integrated circuit, and wherein the one or more computing systems are configured to control the one or more modulation devices to generate the modulated beam with the wavefront pattern based on at least one output image of the one or more output images.

2. The apparatus of claim 1, wherein the one or more computing systems are configured to perform one or more Fast Fourier Transform (FFT) calculations to generate the one or more output images.

3. The apparatus of claim 2, wherein the one or more computing systems are configured to perform a plurality of iterations of the one or more FFT calculations to generate the at least one output image within a threshold of the input of the wavefront pattern.

4. The apparatus of claim 1, wherein the one or more output images comprise a bitmap defining an array of pixel values corresponding to an array of modulation elements of the one or more modulation devices, and wherein the one or more computing systems are configured to control the one or more modulation elements to generate the modulated beam with the wavefront pattern based on the bitmap.

5. The apparatus of claim 1, wherein the integrated circuit comprises one or more field-programmable gate array (FPGA) modules.

6. The apparatus of claim 1, wherein the one or more computing systems are configured to compare the one or more output images to the wavefront pattern.

7. The apparatus of claim 1, wherein the one or more modulation devices comprise a first modulation device and a second modulation device, and wherein the modulated beam comprises a first modulated beam generated by the first modulation device and a second modulated beam generated by the second modulation device, and wherein the first and second modulated beams combine to form the wavefront pattern on a powder bed.

8. The apparatus of claim 7, wherein:
the first modulated beam is generated by at least a first sub-region of the first modulation device, the first sub-region defining a first quantity of modulation elements of the first modulation device less than a total quantity of modulation elements of the first modulation device; and
the second modulated beam is generated by at least a second sub-region of the second modulation device, the second sub-region defining a second quantity of modulation elements of the second modulation device less than a total quantity of modulation elements of the second modulation device.

9. The apparatus of claim 8, wherein an area of the first sub-region is sized equal to an area of the second sub-region.

10. The apparatus of claim 7, wherein at least one of the first and second modulation devices is configured to shift a wavefront of the first modulated beam by up to 2π with respect to a wavefront of the second modulated beam.

11. The apparatus of claim 1, wherein the one or more computing systems are configured to generate at least one control signal to control a modulation state of the one or more modulation devices based on the at least one output image.

12. The apparatus of claim 1, wherein the one or more computing systems are configured to:
select a row of pixels from the input of the wavefront pattern;
calculate a first Fourier field for the row;
convert the first Fourier field into one or more columns of an energy representation extending over at least a portion of at least one modulation device of the one or more modulation devices;
collapse the one or more columns of the energy representation into a row image by summing the one or more columns of the energy representation with a second Fourier field representing a lens; and
output the row image as the at least one output image.

13. A method for additively manufacturing three-dimensional objects, the method comprising:
defining a wavefront pattern to be directed onto a powder bed;
inputting the wavefront pattern into one or more computing systems;
generating, via the one or more computing systems via at least one of a graphics processing unit (GPU) or an integrated circuit, one or more output images to reverse match the wavefront pattern within a threshold;
modulating one or more modulation devices based on at least one output image of the one or more output images;
generating a laser beam;
modulating the laser beam via the one or more modulation devices to generate a modulated beam having the wavefront pattern; and
directing the modulated beam onto a powder bed.

14. The method of claim 13, further comprising
comprising comparing, via the one or more computing systems, the one or more output images to the wavefront pattern; or
performing, via at least one of the graphics processing unit (GPU) or the integrated circuit one, Fast Fourier Transform (FFT) calculations to generate the one or more output images;
wherein generating the one or more output images optionally comprises:
generating a first output image of the one or more output images;
determining whether the first output image is within the threshold of the wavefront pattern; and
in response to the first output image being outside the threshold, performing one or more iterations of the FFT calculations to generate one or more additional output images.

15. The method of claim 13, wherein the one or more modulation devices comprise a first modulation device and a second modulation device, and wherein the modulated beam comprises a first modulated beam and a second modulated beam, and further comprising:
modulating the first modulation device to generate the first modulated beam;
modulating the second modulation device to generate the second modulated beam; and
combining the first and second modulated beams to form the wavefront pattern on the powder bed;
optionally further comprising:
generating the first modulated beam by at least a first sub-region of the first modulation device, the first sub-region defining a first quantity of modulation elements of the first modulation device less than a total quantity of modulation elements of the first modulation device; and
generating the second modulated beam by at least a second sub-region of the second modulation device, the second sub-region defining a second quantity of modulation elements of the second modulation device less than a total quantity of modulation elements of the second modulation device.
